# EUROPEAN PATENT SPECIFICATION

(11) **EP 4 424 575 B1**
(45) Date of publication and mention of the grant of the patent: **10.09.2025**
(21) Application number: 23382189.1
(22) Date of filing: 02.03.2023
(51) Int. Cl.: B62K 19/30, B62J 9/10, B62J 9/40

(54) **LID FOR A STORAGE COMPARTMENT IN A BYCICLE FRAME**
DECKEL FÜR EIN ABLAGEFACH IN EINEM FAHRRADRAHMEN
COUVERCLE POUR COMPARTIMENT DE RANGEMENT DANS UN CADRE DE BICYCLETTE

(43) Date of publication of application: 04.09.2024
(73) Proprietor: ORBEA, S. COOP., 48269 Mallabia (BIZKAIA) (ES)
(72) Inventor: QUERENDEZ FERNÁNDEZ, Álvaro, 48980 Santurtzi (ES)
(74) Representative: Cueto, Sénida

(56) References cited:
- EP-A1- 3 733 492
- DE-U1- 202022 100 556

## Description

### Field of the invention

The present invention belongs to the field of bicycles, and more particularly to the design of a storage compartment provided at one of the tubes of a bicycle frame.

The object of the present invention is a new lid for a storage compartment provided inside the tube of a bicycle frame.

### State of the art

The need to carry a number of elements when cycling, such as tools used for fixing damages or punctures, clothing, food, as well as other articles useful in certain circumstances, is commonly known. Traditionally, these articles where transported in cases or small bags attached to some part of the frame or the seat tube of the bicycle, as well as in pockets provided thereto in the jersey.

However, since the frames of current bicycle designs include tubes with a relatively high cross-section, bicycle models comprising a storage container inside one of said tubes have been developed. For example, several bicycle models having a hole in the downtube for accessing a cavity for storing the aforementioned articles are known. These compartments additionally have a lid designed to be easily opened and closed by the user and which, in addition, ensures watertightness.

In this context, the closest prior art to the present invention is a closing system used in a compartment marketed by the applicant of the present invention. This closing system includes a bas-relief in the carbon fibre of the frame, having a plastic part screwed in the upper portion over which an arm having provided on the underside of the lid slides and is attached, these two features making up an additional difficulty when producing the bicycle, making the system unsuitable for aluminium frames, restricting space, and limiting the watertightness of the system.

A drawback of the currently known storage compartments is related with the adjustment between the lid and the edges of the mouth of the compartment. Indeed, achieving a suitable adjustment frequently requires providing the edges of the compartment with a complex shape. Sometimes, these complex shapes cannot be fabricated in carbon fibre, and can be even more difficult to fabricate in aluminium tubes. Additionally, irrespective of whether they are made of carbon fibre or aluminium, the thickness variability of the tubes does not allow for a watertight engagement of the lid. For these reasons, usually a plastic frame is fixed to the edges of the compartment. This plastic frame absorbs any thickness variability of the tube and, additionally, provides the mouth of the compartment with the desired shape. EP3733492 A1 discloses a lid for a storage compartment in accordance with the preamble of claim 1.

### Brief description of the invention

The inventors of the present invention have developed a new improved lid in comparison to those used in prior art systems. This new lid dispenses with the need to use a frame at the mouth of the compartment and, at the same time, ensures both a suitable watertightness and easy opening and closing manoeuvres by the user.

The present invention is directed to a lid for a storage compartment in the frame of a bicycle. The lid comprises a plate configured to close the mouth of the compartment when in a closed position, as well as an actuator provided at the outer face of the plate and configured to fasten said plate to the mouth of the compartment in the closed position. In this context, the closed position of the lid refers to a position where the lid is placed onto the mouth of the compartment, irrespective of whether it is fixed at said position or not. The open position is any position where the lid is not placed onto the mouth of the compartment.

In principle, the lid could have any configuration provided it fits suitably onto the mouth of the storage compartment. In view of the most frequent cross-sections in bicycle downtubes, a usual shape for the mouth of the storage compartment is elongated in the direction of the axis of the tube. Commonly, the mouth of the compartment is approximately rectangular, for example rectangular with rounded edges. Naturally, the lid will have a complementary shape designed to fit onto the mouth of the compartment.

As to the actuator, it can be implemented in different manners provided it causes, from the exterior, the rotation of the fastening system provided at the inner face of the lid. Thereto, the actuator can be mechanically coupled to said elements in any manner provided they both move together. In connection to the shape, it could be anyone provided it is easy to actuate by the user. For example, the actuator could be configured as a lever designed to alternate between two positions respectively corresponding to a fastening position and a release position. In the fastening position, the lid is fastened in the closing position onto the mouth of the bicycle frame, while in the release position the lid can be freely extracted to separate it from the mouth of the compartment.

The elements disclosed above are mainly similar to those known in prior art storage compartment lids. The lid of the present invention, however, differs from them because it further comprises the following elements:
a) Tracks
   Two tracks are provided on the inner face of the plate in an elevated position with respect to said interior face of the plate, where a perimetral band of the inner face is configured to abut against the edge of the mouth of the compartment when the plate is in the closed position. The tracks end in respective drops towards respective lengths of the perimetral band located at opposite sides of said plate.
   Since, as disclosed below, the tracks are intended to guide the displacement of rotative elements abutting against them, is shape when projected in a plan view on the interior face of the plate will normally be circular. On the other hand, the height of the tracks with respect to the inner face of the plate could be essentially constant throughout most of its length, except forma sudden "fall" or drop towards the inner face of the plate. The transition between the constant height portion and the drop will normally be rounded to ensure a smooth movement of the ends of the arms. Further, the tracks will be placed such that this drop is located at lengths of the perimetral band provided at opposite sides of the plate.
b) Rotating body
   The rotating body, connected to the actuator, is provided on the inner face of the plate. The body comprises two arms having ends, where the ends are continuously biased towards said interior face such that, when the body rotates, the ends of the arms follow said tracks while compressed against them.
   The bias towards the inner face of the plate entails that the arms as a whole, or at least the ends thereof, have a continuous tendency to move towards the inner face of the plate. This tendency ensures that said ends abut against the tracks at all times while moving as the body rotates.

Thanks to this configuration, when the body is caused to rotate by actuating the actuator in a fastening direction, the ends of the arms follow the tracks until arriving at a fastening position where they "fall" down the drop towards the respective lengths of the perimetral band. In this context, the actuator may simply take the form of a lever mechanically connected to the body. Thereby, once the ends of the arms have fallen onto the perimetral band, they press the edge of the mouth of the bicycle frame compartment and thereby fasten the lid in the closed position.

Indeed, when the lid is in the closed position, the perimetral band of the inner face of the plate rests on the mouth of the bicycle frame compartment. A suitable positioning of the tracks and the body the arms extend from ensures that, when the body is rotated, the ends first follow the tracks and then fall down the drop provided at the end of the tracks. Since the arms are biased towards the interior face of the plate, the arms fall towards the inner face of the plate and further they press against the edge of the mouth of said bicycle frame compartment. The edge of the mouth of the bicycle frame compartment is thereby sandwiched between, on one hand, the perimetral band of the inner face of the plate and, on the other hand, the ends of the arms. In this fastening position, the lid cannot be separated from the compartment.

In principle, the continuous bias of the arms towards the inner face of the plate can be achieved in a number of manners provided a sufficient pressure for maintaining the lid fastened to the mouth of the frame is obtained and, at the same time, said pressure can be easily overcome when the user rotates the actuator provided at the outer face of the plate in an opening direction. Note that, to extract the lid, the user needs to rotate the actuator in a direction opposite the fastening direction, and also that the rotation force must be enough to cause the ends of the arms to "climb" the drop.

In a particularly preferred embodiment of the invention, the arms are elastically deformed such that they press in a direction against the inner face of the plate. Thereby, the ends of said arms are ensured to press against the tracks at all times or, when in the fastening position, against the respective length of the perimetral band. For example, the natural shape of the arms may arched towards the inner face of the plate such that, when the body is installed in position, it is necessary to press to cause the arms to "open". When installed, these arms would be elastically deformed, such that the tendency to recover their original shape would cause a continuous force directed towards the inner face of the plate.

In an alternative preferred embodiment, the lid may comprise a spring configured to continuously push the body towards the inner face of the plate. This would also ensure that the ends of the arms press against the tracks at all times or, when in the fastening position, against the respective length of the perimetral band.

The ends of the arms may comprise means to facilitate the displacement along the tracks with the purpose of making the actuation of the actuator as smooth as possible for the user. For example, according to a particularly preferred embodiment of the invention, the ends of the arms comprise wheels configured to roll on the tracks when the body is rotated. Alternatively, the ends of the arms may be configured as shoes to slide on the tracks then the body is rotated.

According to another preferred embodiment of the invention, the lid further comprises first stop means configured to prevent the body from turning in the fastening direction further than the fastening position where the end of the arms have fallen down the drop of the track. The stop means prevent the user from rotating the actuator excessively further than the fastening position, thereby ensuring a correct fastening of the lid against the mouth of the compartment.

The first stop means could be designed in a number of different manners provided they can carry out the above-disclosed function. Particularly, in a preferred embodiment of the invention, the first stop means comprise a first projection projecting from the inner face of the plate and located in the circular trajectory of a first tooth radially projecting from the body. Thus, the first tooth bumps against the first projection when the body has reached the fastening position.

According to another preferred embodiment of the invention, the lid further comprises second stop means configured to prevent the body from turning in a direction opposite the fastening direction further than a predetermined position. Thereby, the assembly formed by the second stop means and the first stop means disclosed above limit the angular movement of the actuator between two perfectly defined fixed positions, namely the fastening position and the release position.

The second stop means could have a number of different configurations provided they carry out the function disclosed above. For example, in a particularly preferred embodiment of the invention, the second stop means comprise a second stop means comprise a second projection projecting from the inner face of the plate and located in the circular trajectory of a second tooth radially protruding from the body. Thereby, the second tooth bumps against the second projection when the body has reached the predetermined position.

According to still one more preferred embodiment of the invention, the lid further comprises a cover covering the body such that it abuts both against the body and against the arms. The purpose if this cover is to keep the arms in the fastening position even in case they somehow broke during a bicycle route, thereby preventing the loss of the lid.

The present invention is further directed to a bicycle comprising a storage compartment provided in a tube of the frame and a lid to close the mouth of said compartment, where the lid is configured in the manner disclosed in the previous paragraphs.

### Brief description of the figures

The details of the invention are shown in the non-limiting accompanying figures.
Figs. 1A and 1B show respective views of a lid according to the invention respectively in the closed position and in the open position.
Fig. 2 shows an exploded view of a first exemplary lid according to the present invention.
Figs. 3A and 3B show two views of the inner side of the first exemplary lid respectively in the release position and in the fastening position.
Fig. 4 shows an exploded view of the second exemplary lid according to the present invention.
Figs. 5A and 5B show two views of the inner side of the second exemplary lid respectively in the release position and in the fastening position.

### Detailed description of the invention

A particular example of a lid (1) according to the present invention is now disclosed with reference to the attached drawings.

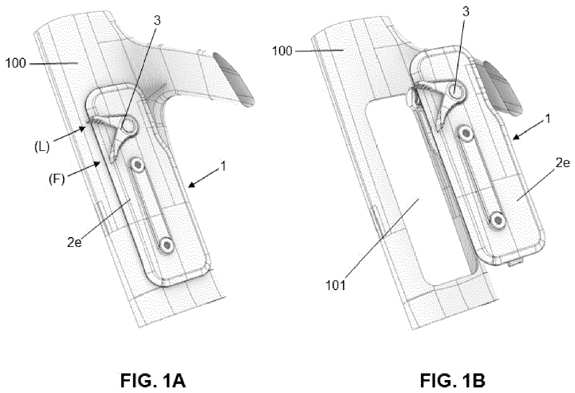

Figs. 1A and 1B show a central portion of the downtube of the frame (100) of a mountain bike. It is the area where the bottle cage is usually placed. In this position, as shown in more detail in Fig. 1B, the downtube has an opening or mouth accessing a compartment (101) for storing a number of articles. The lid (1) of the present invention is designed to alternate between a closed position, shown in Fig. 1A, and an open position, shown in Fig. 1B. Both the mouth of the compartment (101) and the lid (1) have a rectangular shape with rounded edges, although other shapes are possible.

The lid (1) mainly comprises a plate (2) and a set of fastening elements. The plate (2) has an outer face (2e) and an inner face (2i), the fastening elements being provided on the inner face (2i). The actuator (3) is provided on the outer face (2e) of the lid (1), the actuator (3) mainly consisting of a lever rotating around a shaft that, as disclosed below, is mechanically connected to the rest of the fastening elements. As shown in these figures, the actuator (3) alternates between a release position (L) and a fastening position (F) (note that in Figs. 1A and 1B both positions are shown simultaneously). The outer face (2e) of the plate (2) further comprises a pair of orifices for the attachment of the bottle cage.

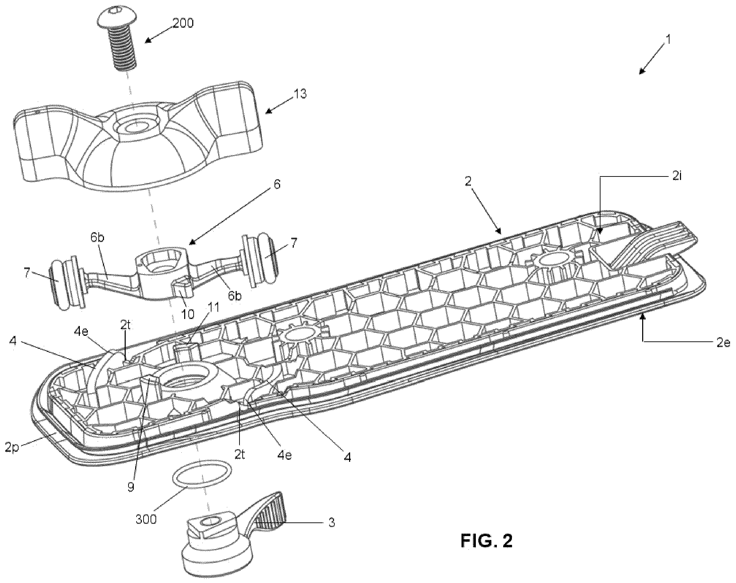

Fig. 2 shows an exploded view of the first exemplary lid (1) according to the present invention where all of the fastening elements can be seen in detail. From the inner face (2i) of the lid (1) emerges a hexagonal cell structure intended for stiffening purposes, as well as some additional elements not related with the present invention. From said inner face (2i) also emerge to tracks (4) having a circular arc plan shape and having an essentially flat zone (that is, a zone having an essentially height with respect to the inner face (2i)) and, at one end, a drop (4e) or "fall" towards the height of said inner face (2i). These two tracks (4) are provided at diametrically opposed positions with respect to a central orifice along whose axis the remaining fastening elements are aligned. Further, the tracks (4) are provided in such a way that the drop or "fall", which, as shown, has rounded edges, is situated in a position adjacent a particular length (2t) of a perimetral band (2p) of the inner face (2i) of the plate (2). In this context, it is important to understand that, when the lid (1) is placed onto the mouth of the compartment (101) in the closing position, the perimetral band (2p) rests on the edge of the mouth of the compartment (101).

The body (6) is provided onto the central orifice and it is mechanically connected to the actuator (3). Thereto, in the present example the actuator has an approximately trapezoidal protrusion that fits into a dedicated cavity of the body (6). Thus, when the lid (1) is mounted, actuator (3) and body (6) rotate together.

The body (6) has two arms (6b) emerging in a radial direction in diametrically opposed directions. The dimensions and location of the body (6) are designed such that, when the body (6) is placed in position, the ends of the arms (6b) abut against the respective tracks (4). Further, in this example the arms (6b) are elastically deformed such that, when the body (6) is in position, they exert a force oriented towards the inner face (2i) of the plate (2). For example, although not shown in this figure, the natural shape of the arms (6b) could be arched in a direction towards said inner face (2i). When placing the body (6) in position, it would be necessary to push against the inner face (2i) of the plate (2), the ends of the arms (6b) thereby being compressed against the tracks (4). Wheels (7) provided at the ends of the arms (6b) facilitate the displacement of said ends of the arms (6b) along the tracks (4) when the body (6) is rotated, thereby making the "tact" of the actuator (3) smoother for the user.

The lid (1) of the invention further comprises first and second stop means limiting the angular displacement of the body (6) and, therefore, also of the actuator (3), thus defining predetermined fastening and release positions.

The first stop means are configured to prevent rotation of the body (6) in a fastening direction further than the fastening position. Particularly, in this example the first stop means comprise a first projection (9) projecting from the inner face (2i) of the plate (2) and situated in the circular trajectory of a first tooth (10) radially protruding from the body (6). When the body (6) is rotated in the fastening direction, at the moment where the body (6) reaches the fastening position the firs tooth (10) bumps into the first projection (9). Thereby, the possibility of the user actuating the actuator (3) further than the fastening position of the lid (1) is prevented.

The second projection means are configured to prevent the body (6) from rotating in a release direction further than a predetermined release position. Specifically, in the present example the second stop means comprise a second projection (11) projecting from the inner face (2i) of the plate (2) and situated in the circular trajectory of a second tooth (12) projecting radially from the body (6). When the user is rotating the actuator (3), and therefore also the body (6), in a release direction, there is a moment where the second tooth (12) bumps against the second projection (11) upon arriving at the predetermined release position. Thereby, the possibility of the user actuating the actuator (3) further than the predetermined release position of the lid (1) is prevented.

Fig. 2 further shows a cover (13) mounted over the body (6). The cover (13) has, as shown, a shape that is complementary with the shape of the body (6) and the arms (6b), such that they are completely covered when mounted. Since the inner side of the cover (13) is in contact with the body (6) and, particularly, the arms (6b), movement of the arms (6b) from the fastening position in case of breakage is prevented. Thereby, the lid (1) is fixed to the frame (100) even if the arms (6b) break during a bicycle route, thus preventing loss of the lid (1).

Fig. 2 shows additional elements needed to assemble the lid (1), such as e.g. a screw (200) and a washer (300). Therefore, to assemble all these elements, the body (6) is placed on the central orifice, the washer (300) is installed from the opposite side, the actuator (3) is placed such that the protrusion fits into the cavity of the body (3), the cover (13) is placed onto the body (6) and the arms (6b), and the whole set is assembled by tightening the screw (200).

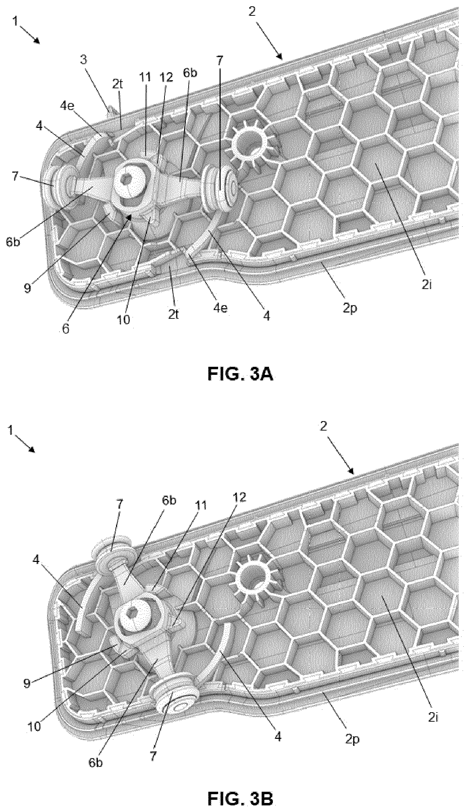

Figs. 3A and 3B show the body (6) respectively in the release position and in the fastening position.

In the release position shown in Fig. 3A, the wheels (7) provided at the ends of the arms (6b) of the body (6) are located at an end of the respective tracks (4) that is separated from the perimeter of the plate (2). The second tooth (12), that emerges radially from the central portion of the body (6), has bumped into the second projection (11) projecting from the inner surface (2i) of the plate (2), thereby preventing the body (6) from turning further.

To move to the fastening position, the user actuates the actuator (3) by rotating it from the release position (L) towards the fastening position (F) as shown in Fig. 1A. The body (6) is thereby rotated in a clockwise direction as shown in Figs. 3A and 3B. Since the elastically deformed arms (6b) of the body (6) are biased towards the inner face (2i) of the plate (2), the wheels (7) provided at the ends thereof remain at all times in contact with the tracks (4) such that they roll over said tracks (4) along their circular trajectory. When the wheels (7) reach the drop (4e), the elastic force causes them to fall downwards until they rest onto the edge of the mouth of the compartment (101). Note that, although not shown in the figures, the edge of the mouth of the compartment (101) would rest on the perimetral band (2p) along the whole perimeter of the plate (2). Since the arms (6b) are still elastically deformed even in this new position, the wheels (7) placed at the ends thereof still exert a pressure force oriented towards the inner surface (2i) of the lid (2) that keeps the edge of the mouth of the compartment (101) fixed. Thereby, the lid (1) is fastened to the tube of the frame (100) where the compartment (101) is implemented.

Fig. 3B shows the body (6) in the fastening position. The first tooth (10) has bumped into the first projection (9), thereby preventing the user from rotating the body (6) further than the fastening position.

To release the lid (1), the user needs only to actuate the actuator (3) again in the opposite direction. This will require a somewhat greater force at the beginning to cause the wheels (7) to "climb" up the drop (4e) against the elastic force exerted by the arms (6b) of the body (6). A suitable configuration of the elastic force, as well as the shape of the drop (4e) and the transition between said drop (4e) and the rest of the track (4), provides a suitable "tact" that, on one hand, ensures a suitable fastening of the lid (1) and, on the other hand, is easy to actuate by the user. The second tooth (12) bumping into the second projection (11) stops the rotation precisely in the predetermined release position (L).

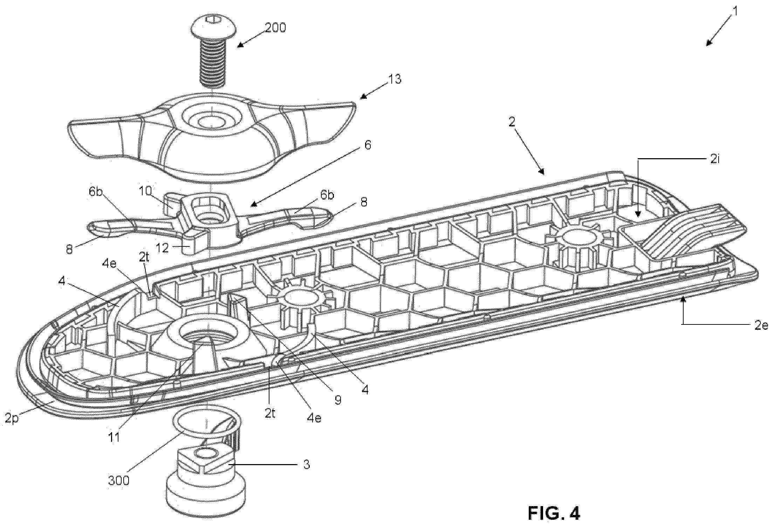

Fig. 4 shows an exploded view of a second example of lid (1) according to the invention where the only substantial difference with respect to the first example shown in Figs. 3 and 4 is that the ends of the arms (6b) of the body (6) lack wheels (7) to facilitate the displacement on the tracks (4). Instead, the ends of the arms (6b) of this second example has shoes (8) that slide over the tracks (4). The shoes (8) essentially consist on projections provided at the ends of the arms (6b) and oriented towards the tracks (4). The shoes (8) are advantageous in comparison with the wheels (7) in that they are easier to produce and less prone to breakage. However, the friction between the shows (8) and the tracks (4) causes the actuation of the actuator (3) to require a somewhat greater force, thereby losing some smoothness.

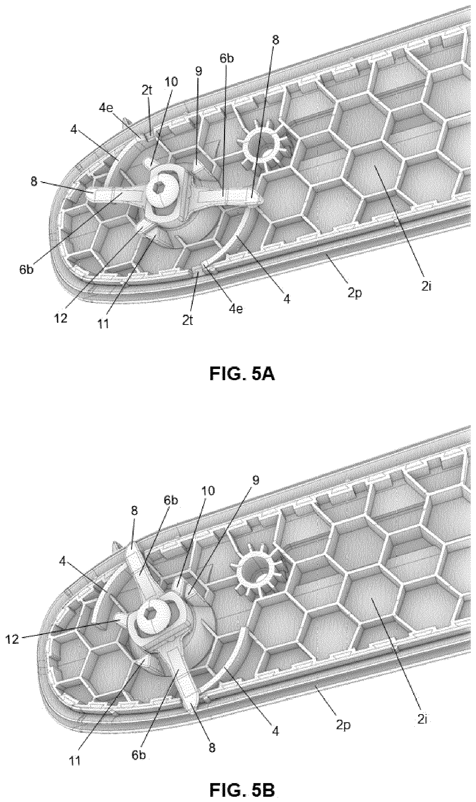

The remaining elements in the second exemplary lid (1) are equivalent to those disclosed with respect to the first example. Therefore, the description in connection to Figs. 2 and 3 provided in the paragraphs above is applicable, *mutatis mutandi,* to Figs. 4 and 5.

## Claims

1. Lid (1) for a storage compartment (101) provided in the frame (100) of a bicycle, comprising a plate (2) configured to close a mouth of the compartment (101) when in a closed position, and an actuator (3) provided on an outer face (2e) of the plate (2) and configured to fasten said plate (2) to the mouth of the compartment (101) in the closed position, **characterized by** comprising:
- two tracks (4) provided on the inner face (2i) of the plate (2) in an elevated position with respect to said inner face (2i), a perimetral band (2p) of the inner face (2i) being configured to rest on the edge of the mouth of the compartment (101) when the plate (2) is in the closed position, and where the tracks (4) finish in respective drops (4e) towards respective lengths (2t) of the perimetral band (2p) located in opposite sides of said plate (2); and
- a rotative body (6) connected to the actuator (3) and provided on the inner face (2i) of the plate (2), the body (6) comprising two arms (6b) having ends that are continuously biased towards said inner face (2i) such that, when the body (6) rotates, the ends of the arms (6b) follow said tracks (4) while compressed against them,
such that, when the body (6) is rotated by actuating the actuator (3) in a fastening direction, the ends of the arms (6b) follow the tracks (4) until arriving at a fastening position where they fall down the drops (4e) towards the respective lengths (2t) of the perimetral band (2p), pressing against the edge of the mouth of the compartment (101) of the frame and thereby fastening the lid (1) in the closed position.

2. Lid (1) according to claim 1, where the arms (6b) of the body (6) are elastically deformed such that they press in a direction towards the inner face (2i) of the plate (2) to ensure that the ends of said arms (6b) press at all times against the tracks (4) or, when in the fastening position, against the respective length (2t) of the perimetral band (2p).

3. Lid (1) according to claim 1, further comprising a spring configured to continuously bias the body (6) in a direction towards the inner face (2i) of the plate (2) to ensure that the ends of the arms (6b) press at all times against the tracks (4) or, when in the fastening position, against the respective length (2t) of the perimetral band (2p).

4. Lid (1) according to any of the previous claims, where the ends of the arms (6b) comprise wheels (7) configured to roll on the tracks (4) when the body is rotated (6).

5. Lid (1) according to any of claims 1-3, where the ends of the arms (6b) are configured as shoes (8) to slide on the tracks (4) when the body (6) is rotated.

6. Lid (1) according to any of the previous claims, further comprising first stop means configured to prevent the body (6b) from turning in the fastening direction further than the fastening position where the ends of said arms (6b) have fallen down the drops (4e) of the tracks (4).

7. Lid (1) according to claim 6, where the first stop means comprise a first projection (9) projecting from the inner face (2i) of the plate (2) and being situated in the circular trajectory of a first tooth (10) protruding radially from the body (6), such that the first tooth (10) bumps into the first projection (9) when the body (6) has reached the fastening position.

8. Lid (1) according to any of the previous claims, further comprising second stop means configured to prevent the body (6b) from rotating in a direction opposite the fastening direction further than a predetermined position.

9. Lid (1) according to claim 8, where the second stop means comprise a second projection (11) protruding from the inner face (2i) of the plate (2) and being situated in the circular trajectory of a second tooth (12) that projects radially from the body (6), such that the second tooth (12) bumps into the second projection (11) when the body has reached the predetermined position.

10. Lid (1) according to any of the previous claims, further comprising a cover (13) covering the body (6) such that it abuts against the body (6) and the arms (6b).

11. Lid (1) according to any of the previous claims, where the actuator (3) is a lever mechanically connected to the body (6).

12. Bicycle comprising a storage compartment (101) provided in the frame (100) and a lid (1) to close the mouth of said compartment (101), **characterized in that** the lid (1) is configured according to any of claims 1-11.

## Patentansprüche

1. Deckel (1) für ein Aufbewahrungsfach (101), das im Rahmen (100) eines Fahrrads vorgesehen ist, welches eine Platte (2), die so konfiguriert ist, dass sie eine Öffnung des Fachs (101) schließt, wenn sie sich in einer geschlossenen Position befindet, und ein Betätigungselement (3), das an einer Außenfläche (2e) der Platte (2) vorgesehen und so konfiguriert ist, dass es die besagte Platte (2) an der Öffnung des Fachs (101) in der geschlossenen Position befestigt, umfasst, **dadurch gekennzeichnet, dass** dieser Folgendes umfasst:
- zwei Führungsbahnen (4), die auf der Innenseite (2i) der Platte (2) in einer erhöhten Position in Bezug auf die Innenseite (2i) vorgesehen sind, wobei ein Umfangsband (2p) der Innenseite (2i) so konfiguriert ist, dass es auf dem Rand der Öffnung des Fachs (101) aufliegt, wenn sich die Platte (2) in der geschlossenen Position befindet, und wobei die Führungsbahnen (4) in entsprechenden Absenkungen (4e) zu entsprechenden Abschnitten (2t) des Umfangsbandes (2p) hin enden, die sich auf gegenüberliegenden Seiten der besagten Platte (2) befinden; und
- einen drehbaren Körper (6), der mit dem Betätigungselement (3) verbunden ist und auf der Innenseite (2i) der Platte (2) vorgesehen ist, wobei der Körper (6) zwei Arme (6b) umfasst, deren Enden kontinuierlich in Richtung der besagten Innenseite (2i) vorgespannt sind, so dass, wenn sich der Körper (6) dreht, die Enden der Arme (6b) den Führungsbahnen (4) folgen, während sie gegen diese gedrückt werden,
so dass, wenn der Körper (6) durch Betätigung des Betätigungselements (3) in einer Befestigungsrichtung gedreht wird, die Enden der Arme (6b) den Führungsbahnen (4) folgen, bis sie in einer Befestigungsposition ankommen, in der sie die Absenkungen (4e) in Richtung der entsprechenden Abschnitte (2t) des Umfangsbandes (2p) hinunterfallen, wobei sie gegen den Rand der Öffnung des Fachs (101) des Rahmens drücken und dadurch den Deckel (1) in der geschlossenen Position befestigen.

2. Deckel (1) nach Anspruch 1, bei dem die Arme (6b) des Körpers (6) elastisch verformt sind, so dass sie in Richtung der Innenseite (2i) der Platte (2) drücken, um sicherzustellen, dass die Enden der Arme (6b) jederzeit gegen die Führungsbahnen (4) oder, in der Befestigungsposition, gegen den entsprechenden Abschnitt (2t) des Umfangsbandes (2p) drücken.

3. Deckel (1) nach Anspruch 1, der außerdem eine Feder umfasst, die so konfiguriert ist, dass sie den Körper (6) kontinuierlich in eine Richtung zur Innenseite (2i) der Platte (2) hin vorspannt, um sicherzustellen, dass die Enden der Arme (6b) jederzeit gegen die Führungsbahnen (4) oder, wenn sie sich in der Befestigungsposition befinden, gegen den entsprechenden Abschnitt (2t) des Umfangsbandes (2p) drücken.

4. Deckel (1) nach einem der vorhergehenden Ansprüche, wobei die Enden der Arme (6b) Räder (7) umfassen, die so konfiguriert sind, dass sie auf den Führungsbahnen (4) rollen, wenn der Körper (6) gedreht wird.

5. Deckel (1) nach einem der Ansprüche 1 bis 3, wobei die Enden der Arme (6b) als Schuhe (8) konfiguriert sind, die auf den Führungsbahnen (4) gleiten, wenn der Körper (6) gedreht wird.

6. Deckel (1) nach einem der vorhergehenden Ansprüche, der ferner erste Anschlagmittel umfasst, die so konfiguriert sind, dass sie verhindern, dass sich der Körper (6b) in der Befestigungsrichtung weiter als bis zu der Befestigungsposition dreht, in der die Enden der besagten Arme (6b) die Absenkungen (4e) der Führungsbahnen (4) hinuntergefallen sind.

7. Deckel (1) nach Anspruch 6, wobei die ersten Anschlagmittel einen ersten Vorsprung (9) umfassen, der von der Innenfläche (2i) der Platte (2) vorsteht und sich in der kreisförmigen Bahn eines ersten Zahns (10) befindet, der radial vom Körper (6) vorsteht, so dass der erste Zahn (10) gegen den ersten Vorsprung (9) stößt, wenn der Körper (6) die Befestigungsposition erreicht hat.

8. Deckel (1) nach einem der vorhergehenden Ansprüche, der ferner ein zweites Anschlagmittel umfasst, das so konfiguriert ist, dass es den Körper (6b) daran hindert, sich in einer Richtung entgegen der Befestigungsrichtung weiter als eine vorbestimmte Position zu drehen.

9. Deckel (1) nach Anspruch 8, wobei das zweite Anschlagmittel einen zweiten Vorsprung (11) umfasst, der aus der Innenfläche (2i) der Platte (2) herausragt und sich in der kreisförmigen Bahn eines zweiten Zahns (12) befindet, der radial aus dem Körper (6) herausragt, so dass der zweite Zahn (12) gegen den zweiten Vorsprung (11) stößt, wenn der Körper die vorbestimmte Position erreicht hat.

10. Deckel (1) nach einem der vorhergehenden Ansprüche, der ferner eine Abdeckung (13) umfasst, die den Körper (6) so bedeckt, dass sie an dem Körper (6) und den Armen (6b) anliegt.

11. Deckel (1) nach einem der vorhergehenden Ansprüche, wobei das Betätigungselement (3) ein Hebel ist, der mechanisch mit dem Körper (6) verbunden ist.

12. Fahrrad, das ein im Rahmen (100) vorgesehenes Aufbewahrungsfach (101) und einem Deckel (1) zum Verschließen der Öffnung des besagten Fachs (101) umfasst, **dadurch gekennzeichnet, dass** der Deckel (1) nach einem der Ansprüche 1 bis 11 konfiguriert ist.

## Revendications

1. Couvercle (1) pour un compartiment de rangement (101) prévu dans le cadre (100) d'un vélo, comprenant une plaque (2) configurée pour fermer une ouverture du compartiment (101) lorsqu'il est en position fermée, et un actionneur (3) prévu sur une face extérieure (2e) de la plaque (2) et configuré pour fixer ladite plaque (2) à l'ouverture du compartiment (101) en position fermée, **caractérisé par le fait qu'**il comprend :
- deux rails (4) disposés sur la face intérieure (2i) de la plaque (2) en position surélevée par rapport à ladite face intérieure (2i), une bande périmétrale (2p) de la face intérieure (2i) étant configurée pour reposer sur le bord de l'ouverture du compartiment (101) lorsque la plaque (2) est en position fermée, et où les rails (4) se terminent en gouttes respectives (4e) vers des longueurs respectives (2t) de la bande périmétrale (2p) situées sur des côtés opposés dudit plateau (2) ; et
- un corps rotatif (6) relié à l'actionneur (3) et disposé sur la face intérieure (2i) de la plaque (2), le corps (6) comprenant deux bras (6b) avec des extrémités enfoncées en continu vers ladite face intérieure (2i) de telle sorte que, lorsque le corps (6) tourne, les extrémités des bras (6b) suivent lesdits rails (4) tout en étant comprimées contre eux, de telle sorte que, lorsque le corps (6) est tourné par actionnement de l'actionneur (3) dans le sens de la fixation, les extrémités des bras (6b) suivent les rails (4) jusqu'à arriver à une position de fixation où elles tombent dans les gouttes (4e) vers les longueurs respectives (2t) de la bande périmétrale (2p), en enfonçant le bord de l'ouverture du compartiment (101) du cadre et en fixant ainsi le couvercle (1) en position fermée.

2. Couvercle (1) conformément à la revendication 1, où les bras (6b) du corps (6) sont déformés élastiquement de manière à s'enfoncer dans une direction vers la face intérieure (2i) de la plaque (2) pour garantir que les extrémités dudit bras (6b) sont enfoncées tout le temps contre les rails (4) ou, lorsqu'elles sont en position de fixation, contre la longueur respective (2t) de la bande périmétrale (2p).

3. Couvercle (1) conformément à la revendication 1, comprenant par ailleurs un ressort prévu pour pousser continuellement le corps (6) dans une direction vers la face intérieure (2i) de la plaque (2) afin de garantir que les extrémités des bras (6b) appuient à tout moment sur les rails (4) ou, lorsqu'elles sont en position de fixation, contre la longueur respective (2t) de la bande périmétrale (2p).

4. Couvercle (1) conformément à n'importe laquelle des revendications précédentes, où les extrémités des bras (6b) comprennent des roulettes (7) configurées pour rouler sur les rails (4) lorsque le corps (6) est tourné.

5. Couvercle (1) conformément à n'importe laquelle des revendications 1 - 3, où les extrémités des bras (6b) sont configurées comme des patins (8) pour glisser sur les rails (4) lorsque le corps (6) est en rotation.

6. Couvercle (1) conformément à n'importe laquelle des revendications précédentes, comprenant par ailleurs un premier moyen d'arrêt configuré pour empêcher le corps (6) de tourner dans la direction de fixation au-delà de la position de fixation où les extrémités desdits bras (6b) sont tombées dans les gouttes (4e) des rails (4).

7. Couvercle (1) conformément à la revendication 6, où le premier moyen d'arrêt comprend une première saillie (9) en saillie depuis la face intérieure (2i) de la plaque (2) et située dans la trajectoire circulaire d'une première dent (10) qui dépasse radialement du corps (6) de telle sorte que la première dent (10) vient frapper contre la première projection (9) où le corps (6) a atteint la position de fixation.

8. Couvercle (1) conformément à n'importe laquelle des revendications précédentes, comprenant en outre un deuxième moyen d'arrêt configuré pour empêcher le corps (6b) de tourner dans un sens opposé à la direction de fixation au-delà d'une position déterminée à l'avance.

9. Couvercle (1) conformément à la revendication 8, où le deuxième moyen d'arrêt comprend une seconde projection (11) se projetant à partir de la face intérieure (2i) de la plaque (2) et étant situé sur la trajectoire circulaire d'une seconde dent (12) qui se projette radialement à partir du corps (6) de telle sorte que la deuxième dent (12) vient frapper contre la deuxième projection (11) lorsque le corps a atteint une position déterminée à l'avance.

10. Couvercle (1) conformément à n'importe laquelle des revendications précédentes, comprenant en outre un couvercle (13) recouvrant le corps (6) de telle sorte qu'il bute sur le corps (6) et les bras (6b).

11. Couvercle (1) conformément à n'importe laquelle des revendications précédentes, où l'actionneur (3) est un levier connecté mécaniquement au corps (6).

12. Vélo comprenant un compartiment de rangement (101) prévu dans le cadre (100) et un couvercle (1) pour refermer l'ouverture dudit compartiment (101), **caractérisé par le fait que** le couvercle (1) est configuré selon n'importe laquelle des revendications 1-11.
